# EUROPEAN PATENT APPLICATION

(11) **EP 1 628 292 A2**
(43) Date of publication of application: **22.02.2006**
(21) Application number: 05291750.7
(22) Date of filing: 18.08.2005
(51) Int. Cl.: G11B 7/00

(54) **Optical disk apparatus and method of controlling optical disk apparatus**

(30) Priority: 18.08.2004 JP 2004238380; 18.08.2004 JP 2004238381
(71) Applicant: SONY CORPORATION, Tokyo (JP)
(72) Inventor: Kubo, Takeshi, Shinagawa-ku, Tokyo (JP); Anzawa, Takuya, Shinagawa-ku, Tokyo (JP)
(74) Representative: Thévenet, Jean-Bruno

(57) **Abstract**

Disclosed herein is an optical disc apparatus for applying a light beam to a surface of an optical disc and detecting a return light beam from the surface of the optical disc. The apparatus includes a light detector (51, 52) for detecting the return light beam having: a first divided area and a second divided area which are divided from each other at the center of the return light beam in a direction perpendicular to a track on the surface of the optical disc; and a third divided area and a fourth divided area which are positioned respectively outwardly of the first divided area and the second divided area in the direction perpendicular to the track. The first and second divided areas are positioned so as not to overlap an area where zeroth-order light and first-order light contained in the return light beam overlap each other.

## Description

### CROSS REFERENCES TO RELATED APPLICATIONS

The present invention contains subject matter related to Japanese Patent Application JP 2004-238380, filed in the Japanese Patent Office on August 18, 2004, and Japanese Patent Application JP 2004-238381 filed in the Japanese Patent Office on August 18, 2004, the entire contents of which being incorporated herein by reference.

### BACKGROUND OF THE INVENTION

The present invention relates to an optical disk apparatus and a method of controlling an optical disk apparatus, and more particularly to an optical disk apparatus for applying a light beam to the surface of an optical disk and detecting a return light beam with a light detector, and a method of controlling such an optical disk apparatus.

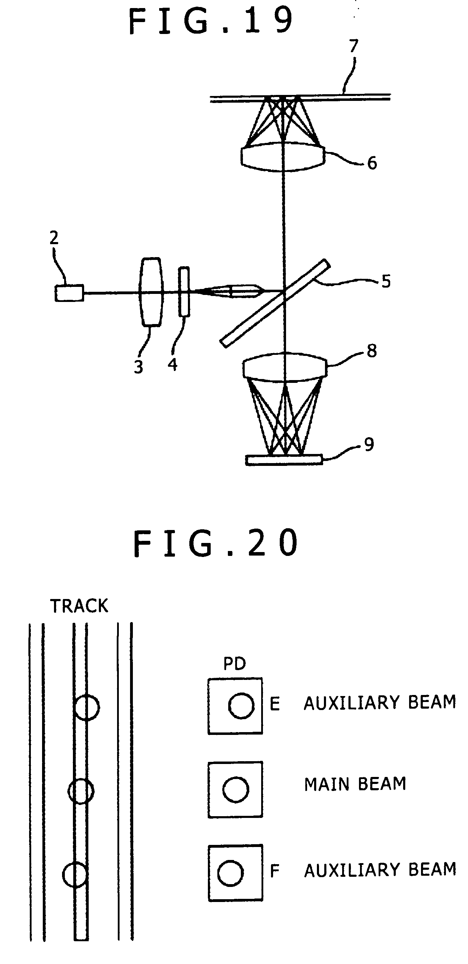

Heretofore, some optical disk apparatus include optical pickup apparatus which operate according to a so-called three-spot process for forming three light spots along a recording track on an optical disk and detecting a tracking error signal 35 based on return light beams from the front and rear light spots. As shown in FIG. 19 of the accompanying drawings, the optical pickup apparatus has a laser diode 2 which emits a laser beam that is converted into a parallel beam by a collimator lens 3. The laser beam is then converted into zeroth-order and first-order main and auxiliary beams by a diffraction grating 4. These main and auxiliary beams are reflected by a beam splitter 5, and are applied through an objective lens 6 to form three light spots along a line that is slightly inclined to a track on a disk 7 as shown in FIG. 20 of the accompanying drawings. Return light beams that are reflected from the three light spots by the disk 7 pass through the objective lens 6 and the beam splitter 5, and are then focused by a lens 8 onto a light detector 9 which has three light detecting areas that correspond to the three light spots, depending on light components along the track direction of the return light beams.

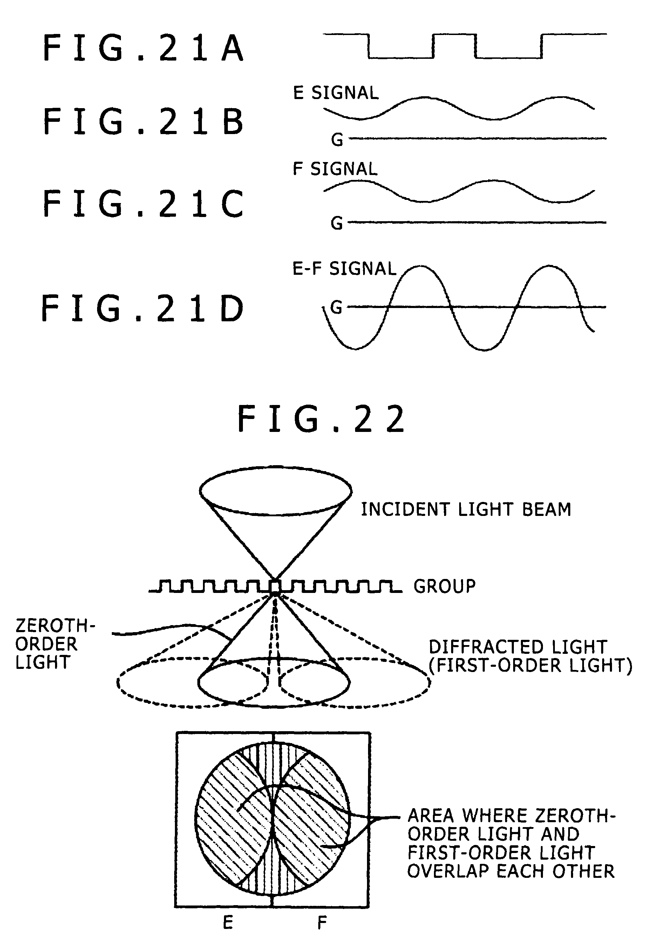

As shown in FIG. 20, the front and rear light detecting areas E, F of the light detector 9 detect reflected amounts of light of the two auxiliary beams, respectively, to generate a tracking error signal 35. Specifically, the two auxiliary beams are positioned respectively on opposite sides of the center of the track. When the light spot of the main beam is shifted off the center of the track, the reflected amounts of light of the two auxiliary beams change in opposite phase, as shown in FIGS. 21A to 21D of the accompanying drawings. A tracking error signal 35 is detected by calculating the difference (E - F) between the reflected amounts of light of the two auxiliary beams.

The three-spot process shown in FIGS. 19 through 21A to 21D for detecting a tracking error signal 35 requires the diffraction grating 4 (see Fig. 19) to be included in the optical system of the optical pickup apparatus for forming auxiliary beams, and the diffraction grating 4 needs to be adjusted. Therefore, the optical system is relatively complex. Furthermore, since the laser beam emitted from the laser diode 2 is divided into three beams, the amount of light of the main beam in the overall amount of light of the laser beam emitted from the laser diode 2 is relatively small, with the result that the rate of utilization of the laser beam emitted from the laser diode 2 is low.

To solve the above problems, there is known a push-pull process for detecting a tracking error signal 35 with a single beam (see Japanese patent No. 3381873). FIG. 22 of the accompanying drawings shows the principle of the push-pull process for detecting a tracking error signal 35. According to the push-pull process, an incident light beam is diffracted by pits or grooves in an optical disk, and the distribution of amounts of light of the diffracted light beams in a far field is detected by a two-segment light detector 9 whose two light detecting areas E, F depend on the light components along the track direction of the diffracted light beams.

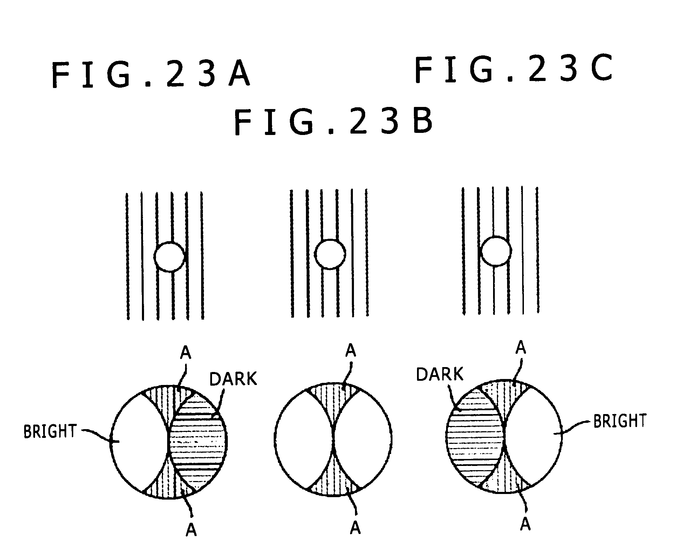

According to the push-pull process, when the incident light beam is aligned with the pits or grooves, the distribution of the amounts of light detected by the light detecting areas E, F of the two-segment light detector 9 are equal to each other, as shown in FIGS. 22 and 23B of the accompanying drawings. When the incident light beam is not aligned with the pits or grooves, as shown in FIG. 23A or 23C of the accompanying drawings, the distribution of the amounts of light detected by the light detecting areas E, F become asymmetric. Actually, when the incident beam spot is displaced to the left or right from the center of the track, as shown in FIG. 23A or 23C, the distribution of the amounts of light detected by the light detecting areas E, F become asymmetric. Since the asymmetry is inverted when the incident beam spot is displaced from the center of the track in opposite directions, the difference between the amounts of light detected by the light detecting areas E, F is detected by the two-segment light detector 9, and averaged over time to make itself free of individual pit properties, thereby producing a tracking error signal 35.

The optical system for detecting a tracking error signal 35 according to the push-pull process does not require the diffraction grating 4 (see FIG. 19) of the three-spot tracking error signal 35 detecting process. Therefore, the optical system and a circuit arrangement combined therewith are simplified.

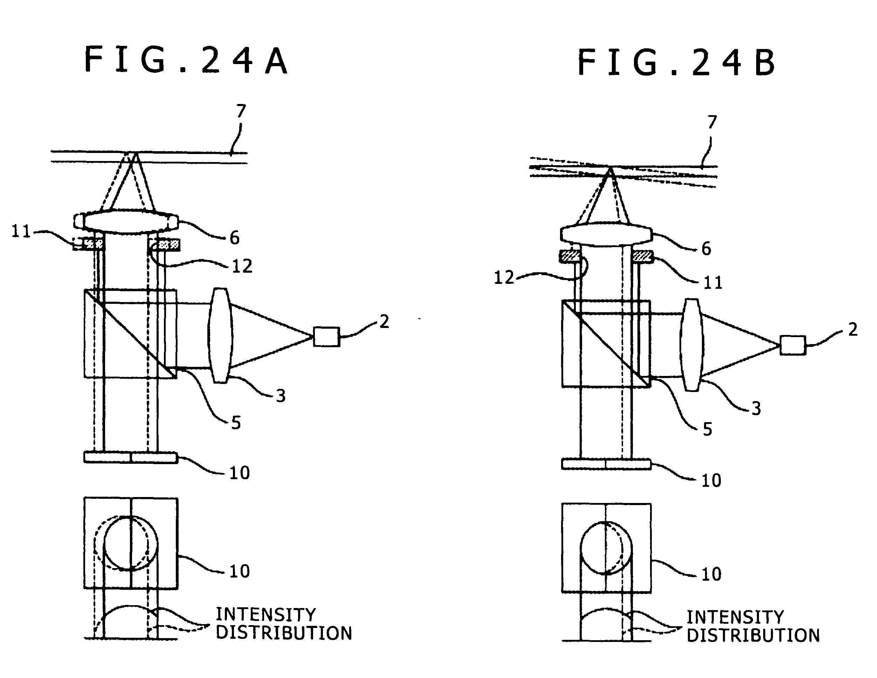

As indicated by the solid lines in FIG. 24A of the accompanying drawings, when the optical axis of an objective lens 6 is completely aligned with the center of the laser beam which is reflected upwardly by a beam splitter 5, the intensity of a laser beam detected by a light detector 10 is symmetric with respect to its central axis. However, when the objective lens 6 is displaced laterally, the beam spot formed on the light detector 10 is moved to the left as indicated by the dotted lines, for example, on the light detector 10, causing a DC offset in a push-pull signal detected by the light detector 10.

The objective lens 6 and a holder plate 11 which holds the objective lens 6 are resiliently supported in a floating state. The objective lens 6 and the holder plate 11 are movable radially (to the left and right in FIG. 24A) for tracking servo and are also movable along the optical axis for focusing servo. The holder plate 11 has a circular aperture 12 defined therein for trimming a substantially central area of the laser beam in a circular pattern. Therefore, the objective lens 6 and the holder plate 11 with the circular aperture 12 are movable in unison with each other. When the objective lens 6 and the holder plate 11 are moved as indicated by the dotted lines in FIG. 24A to displace the central area of the laser beam which is trimmed by the aperture 12 to the dotted-line position, the intensity of light detected by a left light detecting area of the light detector 10 increases, and the intensity of light detected by a right light detecting area of the light detector 10 decreases. Therefore, the push-pull signal detected by the light detector 10 develops a DC offset. When such a DC offset is developed in the push-pull signal, the laser beam is controlled to be offset at all times, deteriorating the S/N ratio of a signal that is recorded or reproduced from the optical disk.

When the surface of the optical disk 7 lies perpendicularly to the optical axis of the laser beam as indicated by the solid lines in FIG. 24B of the accompanying drawings, the beam reflected by the optical disk 7 travels back in alignment with the aperture 12 in the holder plate 11 and is detected by the light detector 10. At this time, the intensities of light detected by the left and right light detecting areas of the light detector 10 are equal to each other, so that no DC offset is developed in the push-pull signal. When the optical disk 7 is inclined to the optical axis of the laser beam as indicated by the dotted lines in FIG. 24B, the beam reflected by the optical disk 7 is displaced to the dotted-line position in FIG. 24B, cutting off a left portion of the reflected light beam that is trimmed by the aperture 12. As the trimmed reflected light beam is shifted in its entirety to the left and the right light detecting area of the light detector 10 lacks its portion therefrom, the intensity of light detected by the right light detecting area of the light detector 10 is reduced, though the intensity of light detected by the left light detecting area of the light detector 10 remains unchanged. Specifically, since no reflected light beam is applied to a crescent-shaped portion of the right light detecting area of the light detector 10, the intensity of light detected by the right light detecting area of the light detector 10 drops. Consequently, a DC offset is developed in the push-pull signal, and the laser beam is controlled to be offset at all times, also deteriorating the S/N ratio of a signal that is recorded or reproduced from the optical disk.

For details, reference should be made to Japanese Patent No. 3381873 and Japanese Patent Laid-open No. Hei 11-25482.

### SUMMARY OF THE INVENTION

It is a desire of the present invention to provide an optical disk apparatus for producing a tracking error signal without the need for a grating in an optical system thereof, and a method of controlling such an optical disk apparatus.

Another desire of the present invention is to provide an optical disk apparatus which cancels a DC component of a tracking error signal that is generated when an object lens moves radially, and a method of controlling such an optical disk apparatus.

Still another desire of the present invention is to provide an optical disk apparatus which removes a DC component of a tracking error signal that is generated when an optical disk is inclined to displace the optical axis of a reflected light beam, and a method of controlling such an optical disk apparatus.

Yet another desire of the present invention is to provide an optical disk apparatus which effectively removes an offset of a DC component added to an error signal when a tracking error signal is detected by the push-pull process, and a method of controlling such an optical disk apparatus.

Yet still another desire of the present invention is to provide an optical disk apparatus which cancels a DC component of a tracking error signal even when first-order beam spots which are reduced in size are held in contact with each other or overlap each other in a central area of a light detector in a direction perpendicular to a track on an optical disk, and a method of controlling such an optical disk apparatus.

A further desire of the present invention is to provide an optical disk apparatus for producing a tracking error signal and a focus error signal based on a combination of output signals from two light detectors which are disposed along the optical path of a return light beam reflected by an optical disk, and a method of controlling such an optical disk apparatus.

According to an embodiment of the present invention, there is provided an optical disc apparatus for applying a light beam to a surface of an optical disc and detecting a return light beam from the surface of the optical disc, including a light detector for detecting the return light beam, the light detector having a first divided area and a second divided area which are divided from each other at the center of the return light beam in a direction perpendicular to a track on the surface of the optical disc, and a third divided area and a fourth divided area which are positioned respectively outwardly of the first divided area and the second divided area in the direction perpendicular to the track, the first divided area and the second divided area being positioned so as not to overlap an area where zeroth-order light and first-order light contained in the return light beam overlap each other.

According to another embodiment of the present invention, there is provided an optical disc apparatus for applying a light beam to a surface of an optical disc and detecting a return light beam from the surface of the optical disc, including a first light detector and a second light detector for detecting the return light beam, the first light detector and the second light detector being disposed along a light path of the return light beam, each of the first light detector and the second light detector having a first divided area and a second divided area which are divided from each other at the center of the return light beam in a direction perpendicular to a track on the surface of the optical disc, and a third divided area and a fourth divided area which are positioned respectively outwardly of the first divided area and the second divided area in the direction perpendicular to the track, the first divided area and the second divided area being positioned so as not to overlap an area where zeroth-order light and first-order light contained in the return light beam overlap each other.

According to still another embodiment of the present invention, there is provided an optical disc apparatus for applying a light beam to a surface of an optical disc and detecting a return light beam from the surface of the optical disc, including a first light detector and a second light detector for detecting the return light beam. The first light detector and the second light detector are disposed along a light path of the return light beam. The first light detector has a first divided area and a second divided area which are divided from each other at the center of the return light beam in a direction perpendicular to a track on the surface of the optical disc, and a third divided area and a fourth divided area which are positioned respectively outwardly of the first divided area and the second divided area in the direction perpendicular to the track. The first divided area and the second divided area are positioned so as not to overlap an area where zeroth-order light and first-order light contained in the return light beam overlap each other. The second light detector has a fifth divided area disposed at the center of the return light beam in the direction perpendicular to the track, and a sixth divided area and a seventh divided area which are positioned outwardly of the fifth divided area in the direction perpendicular to the track.

According to yet another embodiment of the present invention, there is provided an optical disc apparatus for applying a light beam to a surface of an optical disc and detecting a return light beam from the surface of the optical disc, including a light detector for detecting the return light beam. The light detector has at least first and second pairs of divided areas which are symmetrical with respect to the center of the return light beam in a direction perpendicular to a track on the surface of the optical disc. The first pair of divided areas are positioned so as not to overlap an area where zeroth-order light and first-order light contained in the return light beam overlap each other, and are positioned in an area where only the zeroth-order light is applied. The second pair of divided areas is disposed in an area where the first-order light is applied.

The first pair of divided areas may be positioned so as not to overlap the area where the zeroth-order light and the first-order light overlap each other, and may be positioned in the area where only the zeroth-order light is applied, in an area displaced in a track direction along the track from the center of the return light beam in the track direction. The divided areas of the first pair may be disposed respectively on opposite sides of the center of the return light beam in the track direction. Alternatively, the divided areas of the first pair may be disposed respectively on one of opposite sides of the center of the return light beam in the track direction.

According to yet still another embodiment of the present invention, there is provided an optical disc apparatus for applying a light beam to a surface of an optical disc and detecting a return light beam from the surface of the optical disc, including a first light detector and a second light detector for detecting the return light beam. The first light detector and the second light detector are disposed along a light path of the return light beam. The first light detector has at least first and second pairs of divided areas which are symmetrical with respect to the center of the return light beam in a direction perpendicular to a track on the surface of the optical disc. The first pair of divided areas are positioned so as not to overlap an area where zeroth-order light and first-order light contained in the return light beam overlap each other, and are positioned in an area where only the zeroth-order light is applied. The second pair of divided areas are disposed in an area where the first-order light is applied. The second light detector has a pair of divided areas which are symmetrical with respect to the center of the return light beam in the direction perpendicular to the track, and a central undivided area aligned with the first pair of divided areas of the first light detector.

According to a further embodiment of the present invention, there is provided a method of controlling an optical disc apparatus for applying a light beam to a surface of an optical disc and detecting a return light beam from the surface of the optical disc with a light detector. The light detector has a first divided area and a second divided area which are divided from each other at the center of the return light beam in a direction perpendicular to a track on the surface of the optical disc, and a third divided area and a fourth divided area which are positioned respectively outwardly of the first divided area and the second divided area in the direction perpendicular to the track. The first divided area and the second divided area are positioned so as not to overlap an area where zeroth-order light and first-order light contained in the return light beam overlap each other. The method includes the steps of: canceling a DC component of a tracking error with the difference between an output signal from the first divided area and an output signal from the second divided area; and performing tracking control on the optical disc apparatus with a signal whose DC component is canceled.

A tracking error signal may be generated by calculating (A - D) - K(B - C) where B, C, A, D represent the output signals from the first divided area, the second divided area, the third divided area, and the fourth divided area, respectively, and K a proportionality constant or a function.

According to a still further embodiment of the present invention, there is provided a method of controlling an optical disc apparatus for applying a light beam to a surface of an optical disc and detecting a return light beam from the surface of the optical disc with a first light detector and a second light detector, the first light detector and the second light detector being disposed along a light path of the return light beam, each of the first light detector and the second light detector having a first divided area and a second divided area which are divided from each other at the center of the return light beam in a direction perpendicular to a track on the surface of the optical disc, and a third divided area and a fourth divided area which are positioned respectively outwardly of the first divided area and the second divided area in the direction perpendicular to the track, the first divided area and the second divided area being positioned so as not to overlap an area where zeroth-order light and first-order light contained in the return light beam overlap each other. The method includes the steps of: canceling a DC component of a tracking error with the difference between an output signal from the first divided area and an output signal from the second divided area of the first light detector or the second light detector; performing tracking control on the optical disc apparatus with a signal whose DC component is canceled; detecting a focus error from a combination of output signals from the first light detector and the second light detector; and performing focus control on the light beam applied to the surface of the optical disc based on the focus error.

According to a yet further embodiment of the present invention, there is provided a method of controlling an optical disc apparatus for applying a light beam to a surface of an optical disc and detecting a return light beam from the surface of the optical disc with a first light detector and a second light detector. The first light detector and the second light detector are disposed along a light path of the return light beam. The first light detector has a first divided area and a second divided area which are divided from each other at the center of the return light beam in a direction perpendicular to a track on the surface of the optical disc, and a third divided area and a fourth divided area which are positioned respectively outwardly of the first divided area and the second divided area in the direction perpendicular to the track. The first divided area and the second divided area is positioned so as not to overlap an area where zeroth-order light and first-order light contained in the return light beam overlap each other. The second light detector has a fifth divided area disposed at the center of the return light beam in the direction perpendicular to the track, and a sixth divided area and a seventh divided area which are positioned outwardly of the fifth divided area in the direction perpendicular to the track. The method includes the steps of: canceling a DC component of a tracking error with the difference between an output signal from the first divided area and an output signal from the second divided area of the first light detector; performing tracking control on the optical disc apparatus with a signal whose DC component is canceled; detecting a focus error from a combination of output signals from the first light detector and the second light detector; and performing focus control on the light beam applied to the surface of the optical disc based on the focus error.

According to a yet still further embodiment of the present invention, there is provided a method of controlling an optical disc apparatus for applying a light beam to a surface of an optical disc and detecting a return light beam from the surface of the optical disc with a light detector. The light detector has at least first and second pairs of divided areas which are symmetrical with respect to the center of the return light beam in a direction perpendicular to a track on the surface of the optical disc. The first pair of divided areas are positioned so as not to overlap an area where zeroth-order light and first-order light contained in the return light beam overlap each other, and are positioned in an area where only the zeroth-order light is applied. The second pair of divided areas are disposed in an area where the first-order light is applied. The method includes the steps of: obtaining a DC component of a tracking error quantity from the difference between output signals from the first pair of divided areas; and performing tracking control on the optical disc apparatus with an output signal which is produced by subtracting the DC component from a tracking error quantity generated from the difference between output signals from the second pair of divided areas.

The DC component may be obtained based on B - C and a tracking error signal is generated based on (A - D) - K x (B - C) where B, C represent the output signals from the first pair of divided areas, A, D the output signals from the second pair of divided areas, and K a proportionality constant or a function.

According to another embodiment of the present invention, there is provided a method of controlling an optical disc apparatus for applying a light beam to a surface of an optical disc and detecting a return light beam from the surface of the optical disc with a first light detector and a second light detector. The first light detector and the second light detector are disposed along a light path of the return light beam. The first light detector has at least first and second pairs of divided areas which are symmetrical with respect to the center of the return light beam in a direction perpendicular to a track on the surface of the optical disc. The first pair of divided areas are positioned so as not to overlap an area where zeroth-order light and first-order light contained in the return light beam overlap each other, and are positioned in an area where only the zeroth-order light is applied. The second pair of divided areas are disposed in an area where the first-order light is applied. The second light detector has a pair of divided areas which are symmetrical with respect to the center of the return light beam in the direction perpendicular to the track, and a central undivided area aligned with the first pair of divided areas of the first light detector. The method includes the steps of: obtaining a DC component of a tracking error quantity from the difference between output signals from the first pair of divided areas of the first light detector; performing tracking control on the optical disc apparatus with an output signal which is produced by subtracting the DC component from a tracking error quantity generated from the difference between output signals from the second pair of divided areas of the first light detector; and performing focus control on the light beam applied to the surface of the optical disc based on a focus servo error quantity which is produced from the difference between the sum of the output signals from the second pair of divided areas of the first light detector and the sum of the output signals from the pair of divided areas of the second light detector.

The sum of the output signals from the first pair of divided areas of the first light detector may be subtracted from the sum of the output signals from the second pair of divided areas of the first light detector, and an output signal from the central area of the second light detector may be subtracted from the sum of the output signals from the pair of divided areas of the second light detector. A focus error signal may be generated by calculating ((A + D) - (B + C)) - ((F + H) - G)) where B, C represent the output signals from the first pair of divided areas of the first light detector, A, D the output signals from the second pair of divided areas of the first light detector, F, H the output signals from the pair of divided areas of the second light detector, and G the output signal from the central area of the second light detector.

According to the embodiment of the present invention, in the optical disc apparatus for applying a light beam to a surface of an optical disc and detecting a return light beam from the surface of the optical disc. The light detector for detecting the return light beam has the first divided area and the second divided area which are divided from each other at the center of the return light beam in the direction perpendicular to the track on the surface of the optical disc, and the third divided area and the fourth divided area which are positioned respectively outwardly of the first divided area and the second divided area in the direction perpendicular to the track. The first divided area and the second divided area are positioned so as not to overlap the area where zeroth-order light and first-order light contained in the return light beam overlap each other.

The above optical disc apparatus is capable of canceling a DC component of a tracking error in the direction perpendicular to the track with the difference between the output signal from the first divided area and the output signal from the second divided area.

According to the other embodiment of the present invention, in the optical disc apparatus for applying a light beam to a surface of an optical disc and detecting a return light beam from the surface of the optical disc. The first light detector and the second light detector for detecting the return light beam are disposed along a light path of the return light beam. Each of the first light detector and the second light detector has the first divided area and the second divided area which are divided from each other at the center of the return light beam in the direction perpendicular to the track on the surface of the optical disc, and the third divided area and the fourth divided area which are positioned respectively outwardly of the first divided area and the second divided area in the direction perpendicular to the track. The first divided area and the second divided area are positioned so as not to overlap the area where zeroth-order light and first-order light contained in the return light beam overlap each other.

The above optical disc apparatus is capable of canceling a DC component of a tracking error with the difference between the output signal from the first divided area and the output signal from the second divided area of the first light detector or the second light detector, performing tracking control on the optical disc apparatus with the signal whose DC component is canceled, detecting a focus error from the combination of the output signals from the first light detector and the second light detector, and performing focus control on the light beam applied to the surface of the optical disc based on the focus error.

According to the still other embodiment of the present invention, in the optical disc apparatus for applying a light beam to a surface of an optical disc and detecting a return light beam from the surface of the optical disc, the first light detector and the second light detector for detecting the return light beam are disposed along the light path of the return light beam. The first light detector has the first divided area and the second divided area which are divided from each other at the center of the return light beam in the direction perpendicular to the track on the surface of the optical disc, and the third divided area and the fourth divided area which are positioned respectively outwardly of the first divided area and the second divided area in the direction perpendicular to the track. The first divided area and the second divided area are positioned so as not to overlap an area where zeroth-order light and first-order light contained in the return light beam overlap each other. The second light detector has the fifth divided area disposed at the center of the return light beam in the direction perpendicular to the track, and the sixth divided area and the seventh divided area which are positioned outwardly of the fifth divided area in the direction perpendicular to the track.

The above optical disc apparatus is capable of canceling a DC component of a tracking error with the difference between the output signal from the first divided area and the output signal from the second divided area of the first light detector, performing tracking control on the optical disc apparatus with the signal whose DC component is canceled, detecting a focus error from the combination of output signals from the first light detector and the second light detector, and performing focus control on the light beam applied to the surface of the optical disc based on the focus error.

According to the yet other embodiment of the present invention, in the optical disc apparatus for applying a light beam to a surface of an optical disc and detecting a return light beam from the surface of the optical disc, the light detector for detecting the return light beam has at least the first and second pairs of divided areas which are symmetrical with respect to the center of the return light beam in the direction perpendicular to a track on the surface of the optical disc. The first pair of divided areas are positioned so as not to overlap the area where zeroth-order light and first-order light contained in the return light beam overlap each other, and are positioned in the area where only the zeroth-order light is applied. The second pair of divided areas are disposed in an area where the first-order light is applied. A DC component of a tracking error quantity is obtained from the difference between the output signals from the first pair of divided areas, and tracking control is performed on the optical disc apparatus with the output signal which is produced by subtracting the DC component from a tracking error quantity generated from the difference between the output signals from the second pair of divided areas.

The above optical disc apparatus is thus capable of obtaining a DC component of a tracking error quantity from the difference between the output signals from the first pair of divided areas, and performing tracking control on the optical disc apparatus with the output signal which is produced by subtracting the DC component from the tracking error quantity generated from the difference between output signals from the second pair of divided areas. Therefore, the light beam spot is prevented from being controlled to as to be offset at all times, and the S/N ratio of a signal recorded on or reproduced from the optical disc is prevented from being deteriorated.

According to the yet still other embodiment of the present invention, in the optical disc apparatus for applying a light beam to a surface of an optical disc and detecting a return light beam from the surface of the optical disc. The first light detector and the second light detector for detecting the return light beam are disposed along a light path of the return light beam. The first light detector light detector has at least the first and second pairs of divided areas which are symmetrical with respect to the center of the return light beam in the direction perpendicular to the track on the surface of the optical disc. The first pair of divided areas are positioned so as not to overlap the area where zeroth-order light and first-order light contained in the return light beam overlap each other, and are positioned in the area where only the zeroth-order light is applied. The second pair of divided areas are disposed in the area where the first-order light is applied. The second light detector has the pair of divided areas which are symmetrical with respect to the center of the return light beam in the direction perpendicular to the track, and the central undivided area aligned with the first pair of divided areas of the first light detector. A DC component of a tracking error quantity is obtained from the difference between the output signals from the first pair of divided areas of the first light detector, and tracking control is performed on the optical disc apparatus with an output signal which is produced by subtracting the DC component from a tracking error quantity generated from the difference between the output signals from the second pair of divided areas of the first light detector. Focus control is performed on the light beam applied to the surface of the optical disc based on a focus servo error quantity which is produced from the difference between the sum of the output signals from the second pair of divided areas of the first light detector and the sum of the output signals from the pair of divided areas of the second light detector.

The above optical disc apparatus is thus capable of obtaining a tracking error quantity with a DC component removed therefrom with the output signals from the first pair of divided areas of the first light detector and the output signals from the second pair of divided areas of the first light detector, performing tracking control on the optical disc apparatus based on the tracking error quantity, obtaining a focus servo error quantity from the difference between the sum of the output signals from the second pair of divided areas of the first light detector and the sum of the output signals from the pair of divided areas of the second light detector, and performing focus control on the light beam applied to the surface of the optical disc based on the focus servo error quantity.

The above and other objects, features, and advantages of the present invention will become apparent from the following description when taken in conjunction with the accompanying drawings which illustrate preferred embodiments of the present invention by way of example.

### BRIEF DESCRIPTION OF THE DRAWINGS

FIG. 1 is a block diagram of an optical disk apparatus according to the present invention;
FIG. 2 is a vertical cross-sectional view of an optical system of an optical pickup of the optical disk apparatus;
FIG. 3 is a vertical cross-sectional view showing the layout of a pair of light detectors mounted on a beam splitter prism;
FIGS. 4A and 4B are plan views showing patterns of light detecting areas of the light detectors;
FIGS. 5A and 5B are plan views showing other patterns of light detecting areas of the light detectors;
FIG. 6 is a block diagram of a processing circuit for generating a tracking error signal from output signals of the light detectors;
FIG. 7 is a block diagram of a processing circuit for generating a focus error signal from output signals of the light detectors;
FIG. 8 is a block diagram of another processing circuit for generating a focus error signal from output signals of the light detectors;
FIG. 9 is a view showing how optical beam spots and zeroth-order and first-order light beams overlap each other;
FIGS. 10A and 10B are diagrams showing tracking error signals and light beam spots detected on the light detectors;
FIGS. 11A through 11C are plan views showing light beam spots detected on the light detectors;
FIG. 12 is a graph showing how a detected output signal of a light detector varies when the focused state of a light beam spot detected thereby varies;
FIGS. 13A through 13C are plan views showing patterns of light detecting areas of light detectors according to another embodiment;
FIG. 14 is a block diagram of a processing circuit for generating a tracking error signal from output signals of the light detectors;
FIG. 15 is a block diagram of another processing circuit for generating a tracking error signal from output signals of the light detectors;
FIG. 16 is a block diagram of a processing circuit for generating a focus error signal from output signals of the light detectors;
FIG. 17 is a block diagram of another processing circuit for generating a focus error signal from output signals of the light detectors;
FIG. 18A and 18B are diagrams showing tracking error signals and light beam spots detected on the light detectors;
FIG. 19 is a vertical cross-sectional view of an optical system for detecting a tracking error of a conventional optical disk apparatus;
FIG. 20 is a diagram showing the positions of light beam spots on an optical disk and a pattern of light detecting areas of a light detector according to a three-spot process;
FIGS. 21A to 21D are graphs showing reflected amounts of light of light beams in the three-spot process;
FIG. 22 is a front view illustrative of the principles of the push-pull process for detecting a tracking error;
FIGS. 23A through 23C are plan views illustrative of the principles of the push-pull process for detecting a tracking error; and
FIGS. 24A through 24C are vertical cross-sectional views showing the manner in which an offset is generated when an objective lens is displaced laterally and an optical disk is inclined.

### DETAILED DESCRIPTION OF THE PREFERRED EMBODIMENTS

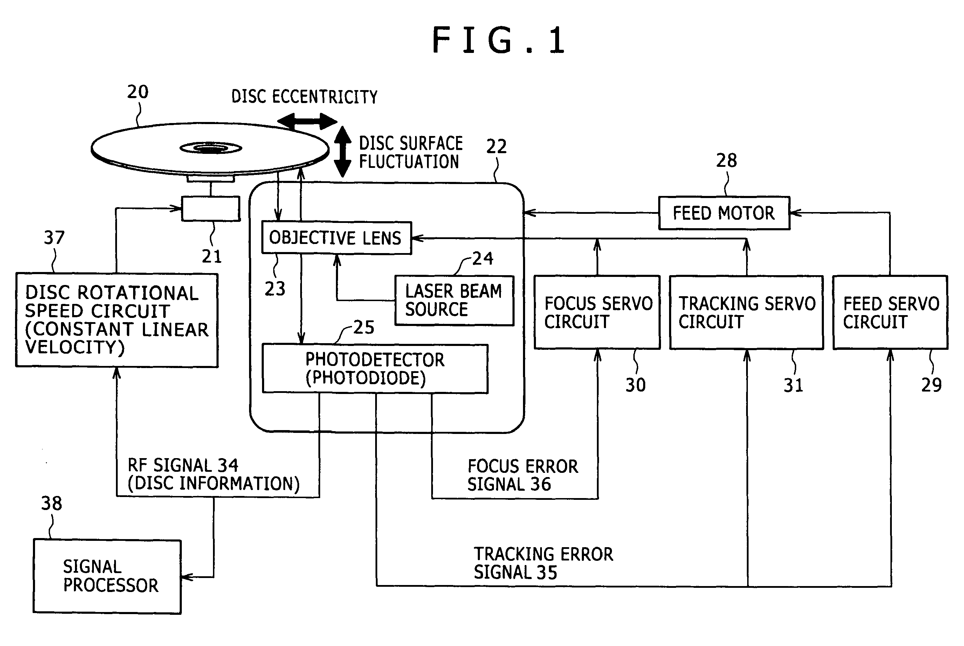

FIG. 1 shows a overall schematic diagram in block form an optical disc apparatus according to the present invention. As shown in FIG. 1, the optical disc apparatus has a spindle motor 21 for rotating an optical disc 20 and an optical pickup 22 which optically faces the optical disc 20. The optical pickup 22 includes an objective lens 23, a laser beam source 24, and a photodetector 25.

The optical pickup 22 is movable radially of the optical disc 20 by a feed motor 28 connected to a feed servo circuit 29. The optical pickup 22 is also associated with a focus servo circuit 30 and a tracking servo circuit 31.

The photodetector 25 of the optical pickup 22 outputs a RF signal 34, a tracking error signal 35, and a focus error signal 36. The RF signal 34 is supplied to a spindle servo circuit 37 to control the spindle motor 21 and is also processed by a signal processor 38.

The optical disc apparatus operates as follows: The spindle motor 21 rotates the optical disc 20 about its own axis, and the optical pickup 22 is moved radially of the optical disc 20 by the feed motor 28 that is controlled by the feed servo circuit 29. A laser beam emitted from the laser beam source 24 is applied through the objective lens 23 to the surface of the optical disc 20, which reflects the laser beam that is applied through the objective lens 23 to the photodetector 25. The photodetector 25 generates and supplies the RF signal 34 to the spindle servo circuit 37, which controls the spindle motor 21. The photodetector 25 also generates and supplies the tracking error signal 35 to the tracking servo circuit 31, which moves the objective lens 23 radially of the optical disc 20 for tracking control. The photodetector 25 also generates and supplies the focus error signal 36 to the focus servo circuit 30, which moves the objective lens 23 along the optical axis of the laser beam for focus control. The RF signal 34 from the photodetector 25 is also processed by the signal processor 38, which produces a reproduced output signal.

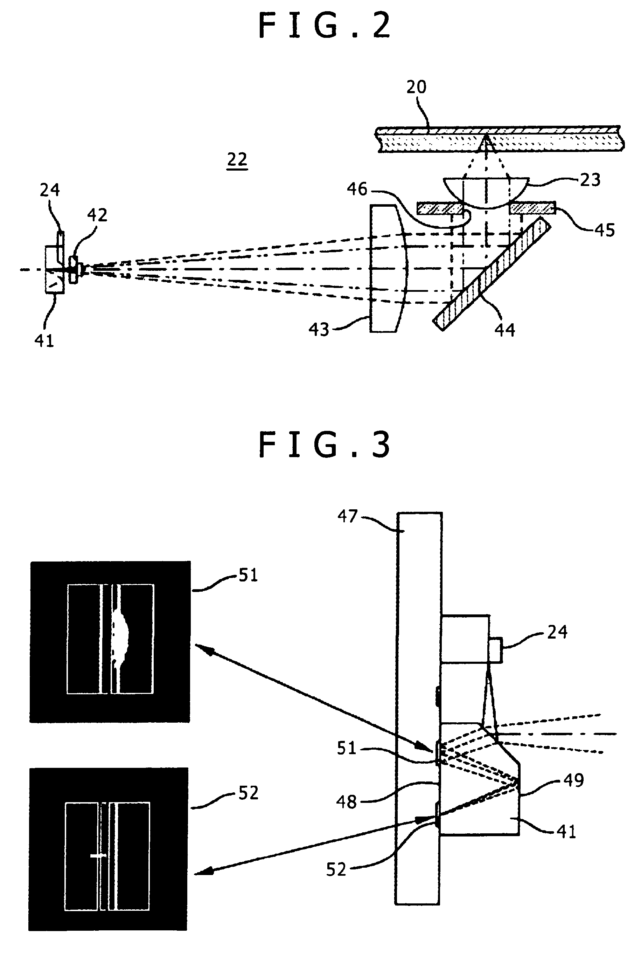

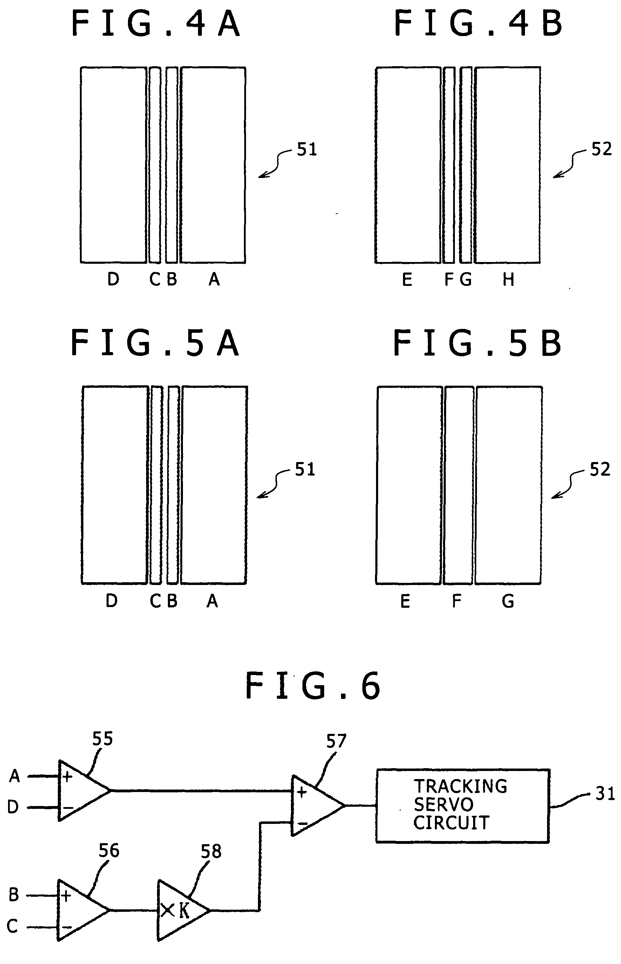

Details of the optical pickup 22 will be described below with reference to FIGS. 2 through 4A, 4B. FIG. 2 shows the optical pickup 22 which incorporates an optical system for detecting a tracking error signal 35 according to the push-pull process. A laser beam emitted from a laser diode 24 is reflected by a beam splitter prism 41 and passes through a quarter-wave plate 42. The laser beam is then converted by a collimator lens 43 into a parallel beam, which is reflected by a mirror 44 and then trimmed by an aperture 46 defined in a holder plate 45. The laser beam is then applied through the objective lens 23 to the optical disc 20. A return light beam that is refracted by the optical disc 20 passes through the objective lens 23 and the aperture 46, and is reflected by the mirror 44 to pass through the collimator lens 43 and the quarter-wave plate 42. The return light beam then passes through the beam splitter prism 41 and is applied to a first light detector 51 of the photodetector 25. The return light beam is reflected by a half-mirror surface 48 of the beam splitter prism 41, and reflected by a fully reflecting surface 49 of the beam splitter prism 41 to fall on a second light detector 52 of the photodetector 25. The first and second light detectors 51, 52 detect respective amounts of light of the return light beam, and produce the light signal (RF signal) 34, the tracking error signal 35, and the focus error signal 36 based on the detected amounts of light of the return light beam.

The first and second light detectors 51, 52 are disposed at a spaced interval on the half-mirror surface 48 of the beam splitter prism 41. As shown in FIGS. 4A and 4B, the first and second light detectors 51, 52 have four light detecting areas A through D and four light detecting areas E through H, respectively, for detecting the return light beam, depending on light components of the return light beams along the track direction of the optical disc 20. The light detecting areas B, C of the first light detector 51 and the light detecting areas F, G of the second light detector 52 are shaped out of alignment with overlapping areas of zeroth-order light (directly reflected light) and first-order light (diffracted light) which are contained in the return light beam.

FIGS. 5A and 5B show another pattern of the light detecting areas of the first and second light detectors 51, 52. The first light detector 51 shown in FIG. 5A has four light detecting areas A through D similar to those of the first light detector 51 shown in FIG. 4A. However, the second light detector 52 shown in FIG. 5B has three light detecting areas E, F, G. This is because the tracking error signal 35 is generated from the output signal of the first light detector 51, and the focus error signal 36 is generated from a combination of the output signals of the first and second light detectors 51, 52. The second light detector 52 does not need to cut off a DC component in order to produce the focus error signal 36, and does not require the central light detecting area F to be divided into two areas.

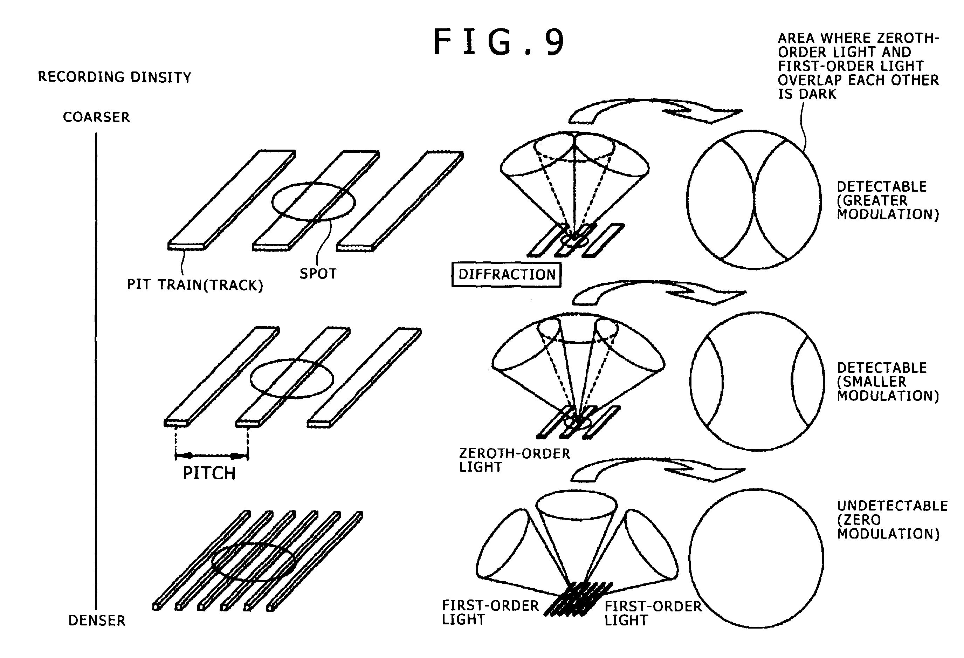

Generally, the overlapping relationship between the zeroth-order light (directly reflected light) and the first-order light (diffracted light) which are contained in the return light beam that is produced when a beam spot is applied to the optical disc 20, varies depending on the recording density of tracks on the optical disc 20, as shown in FIG. 9. Specifically, providing the beam spot has a constant diameter, a return light beam diffracted from an optical disc such as a CD (Compact Disc) or an MD (Mini Disc) having a larger track pitch contains zeroth-order light and first-order light which overlap each other in the beam spot except at the center of the track, and any area where only the zeroth-order light is applied does not exist in a direction perpendicular to the track. A return light beam diffracted from an optical disc such as a DVD (Digital Versatile Disc), a Blue-ray Disc, an HD-DVD, etc. having a smaller track pitch as compared with the beam spot diameter contains zeroth-order light and first-order light which do not overlap each other in the central area of the beam spot of the return light beam. A return light beam diffracted from an optical disc having a much smaller track pitch contains zeroth-order light and first-order light which do not overlap each other anywhere in the beam spot. In the latter case, it is impossible to detect a tracking error signal 35 according to the push-pull process based on the first-order light.

According to the present embodiment, the track pitch as compared with the beam spot corresponds to the intermediate pitch shown in FIG. 9, and the zeroth-order light and the first-order light do not overlap each other in the central area of the beam spot of the return beam in the direction perpendicular to the track. The present embodiment resides in that the central light detecting areas B, C of the light detector 51 for detecting the return light beam are positioned and shaped so as not to overlap the area where the zeroth-order light and the first-order light overlap each other.

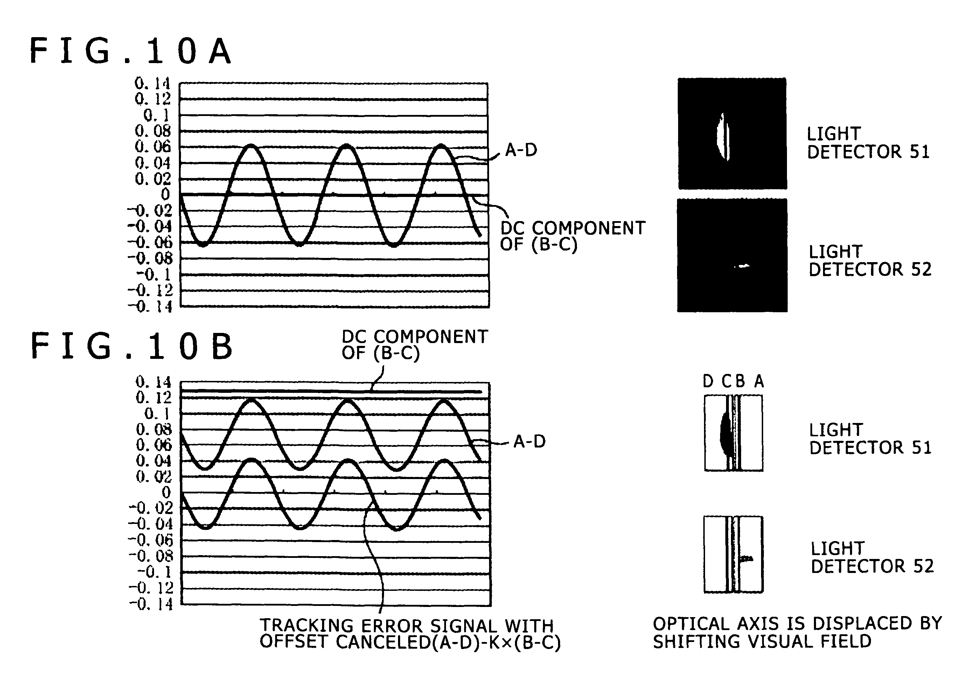

With the light detecting areas B, C being shaped so as not to overlap the area where the zeroth-order light and the first-order light overlap each other and also being shaped as shown in FIG. 4A, the difference between detected output signals from the light detecting areas A, B of the light detector 51 is represented by A - B and the difference between the detected output signals from the light detecting areas B, C of the light detector 51 is represented by B - C (see FIG. 10A).

As described above, since the light detecting areas B, C of the light detector 51 in FIG. 4A are shaped so as not to overlap the area where the zeroth-order light and the first-order light do not overlap each other as shown in FIG. 9, the light detecting areas B, C are not susceptible to the first-order light, and hence to pits and grooves that generate the tracking error signal 35. Therefore, even when the objective lens 23 is moved with respect to the optical disc 20 or the optical disc 20 is tilted to displace the optical axis of the return light beam, the light detecting areas B, C are not adversely affected as shown in FIG. 10B by canceling the DC component (offset) B - C. Accordingly, a tracking error signal 35 free of a DC offset can be generated by calculating the difference B - C between the detected output signals from the light detecting areas B, C and calculating (A - D) - K x (B - C) (see FIG. 10B).

FIG. 6 shows a circuit for generating a tracking error signal 35 from the detected output signals from the light detectors 51, 52. The circuit shown in FIG. 6 has three subtractors 55, 56, 57 and a multiplier 58 for generating a tracking error signal 35 according to the above equation (A - D) - K x (B - C). Alternatively, the circuit shown in FIG. 6 may generate a tracking error signal 35 according to the equation ((A + B) - (C + D)) - K x (B - C).

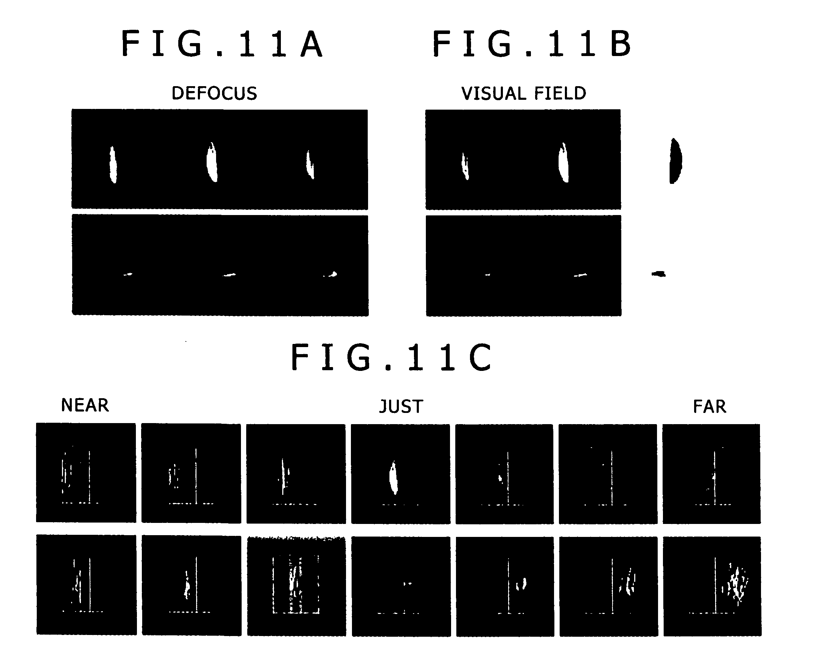

The focus error signal 36 shown in FIG. 1 can be generated from a combination of the detected output signals from the light detectors 51, 52. FIGS. 11A through 11C show light beam spots detected on the light detectors 51, 52 when the objective lens 23 is moved along the optical axis and displaced to opposite sides of a just focused position. The light beam spots detected on the light detectors 51, 52 are focused in substantially symmetrical shapes with respect to the just focused position.

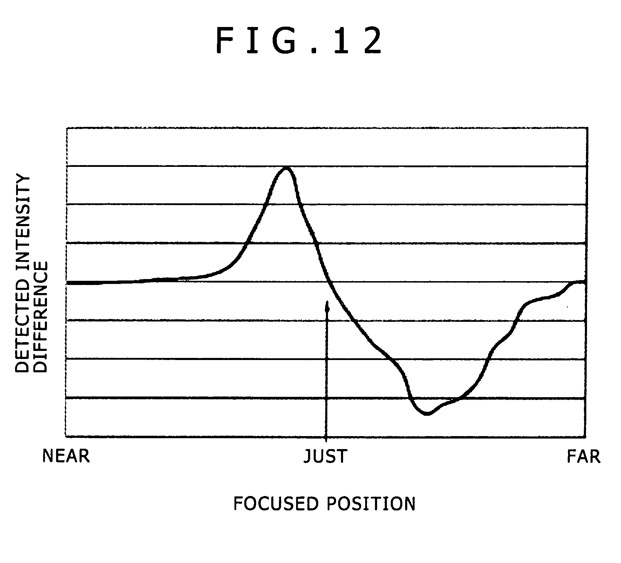

The difference between the detected output signals from the light detectors 51, 52 is plotted as shown in FIG. 12. At the just focused position, the difference between the detected output signals from the light detectors 51, 52 is substantially nil. Therefore, a positional deviation from the just focused position can be detected based on how much the difference between the detected output signals from the light detectors 51, 52 deviates from nil. This indicates that a focus error signal 36 can be generated from the difference between the detected output signals from the light detectors 51, 52 which are disposed along the light path.

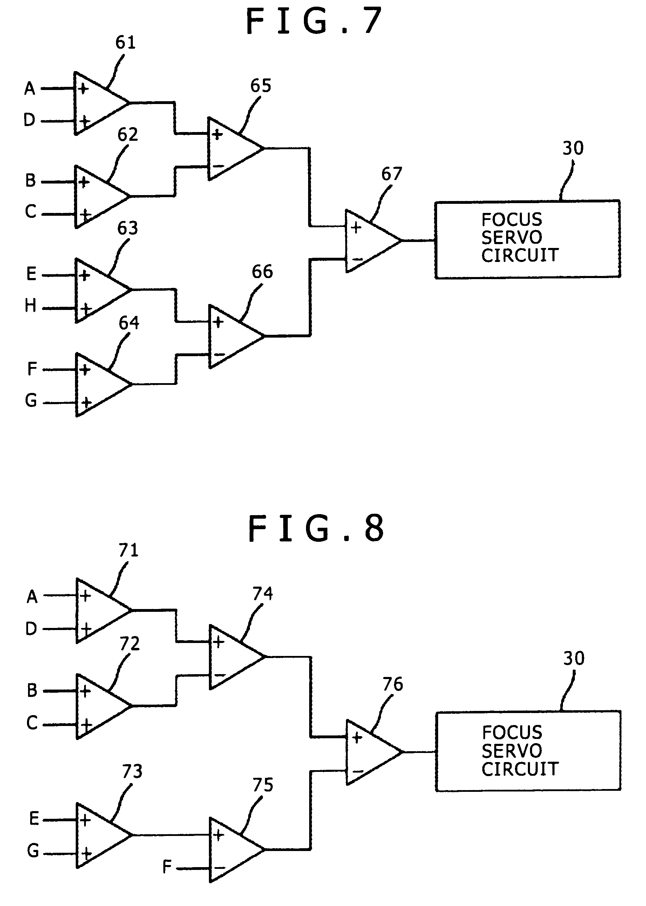

FIG. 7 shows a circuit for generating a focus error signal 36 from the detected output signals from the light detectors 51, 52 shown in FIGS. 4A and 4B. The circuit shown in FIG. 7 has four adders 61, 62, 63, 64 and three subtractors 65, 66, 67 for generating a focus error signal 36 according to the equation (A + D) - (B + C) - ((E + H) - (F - G)).

FIG. 8 shows another circuit for generating a focus error signal 36 from the detected output signals from the light detectors 51, 52 shown in FIGS. 5A and 5B. The circuit shown in FIG. 8 has three adders 71, 72, 73 and three subtractors 74, 75, 76 for generating a focus error signal 36 according to the equation (A + D) - (B + C) - ((E + G) - F)).

By using the light detectors 51, 52 with the divided light detecting areas shaped as shown in FIGS. 4A and 4B or 5A and 5B, it is possible to detect an offset-free tracking error signal, i.e., to calculate (A - D) - K x (B - C) to detect a tracking error signal 35, even when the objective lens 23 is moved radially or the optical disc 20 is tilted to displace the optical axis of the return light beam. If the central light detecting areas B, C, F, G are shaped so as not to overlap the area where the zeroth-order light and the first-order light overlap each other, then a tracking error signal 35 may be detected by calculating (A - D) + (E - H) - K x ((B - C) + (F - G)) or (E - H) - K x (B - C).

A focus error signal 36 can be detected by calculating the difference between the difference between the sum (A + D) of the detected output signals of the outer light detecting areas A, D of the light detector 51 and the sum (B + C) of the detected output signals of the inner light detecting areas B, C thereof, and the difference between the sum (E + H) of the detected output signals of the outer light detecting areas E, H of the light detector 52 and the sum (F + G) of the detected output signals of the inner light detecting areas F, G thereof, i.e., (A + D) - (B + C) - ((E + H) - (F + G)).

The return light beam that is refracted by the optical disc 20 passes through the objective lens 23 and is reflected by the mirror 44 to pass through the collimator lens 43 and the quarter-wave plate 42. The return light beam then passes through the beam splitter prism 41 and is applied to the first light detector 51. The return light beam is reflected by the half-mirror surface 48, and then reflected by the fully reflecting surface 49 to fall on the second light detector 52. The first and second light detectors 51, 52 detect respective amounts of light of the return light beam, and produce the light signal (RF signal representing a reproduced output) 34, the tracking error signal 35, and the focus error signal 36 based on the detected amounts of light of the return light beam.

If the second light detector 52 includes a three-segment light detector having three light detecting areas E, F, G as shown in FIG. 5B, and is combined with the first light detector 51, then it is possible to detect a focus error signal 36 by calculating (A + D) - (B + C) - ((E + G) - F)).

Another embodiment of the present invention will be described below. If pit trains are coarser as compared with the beam spot as shown in FIG. 9 or the beam spot is reduced in diameter as compared with the pitch of pit trains because of a reduction in the size of the optical pickup 22, then zeroth-order light and first-order light overlap each other or are held against each other in the central area of the light detector in the track direction and in the direction perpendicular to the track. Therefore, there is no area where zeroth-order light and first-order light do not overlap each other in the central area of the light detector in the track direction and in the direction perpendicular to the track (detectable state (greater modulation) with coarser pit trains in FIG. 9). It is thus impossible to produce a signal for cutting off a DC component, based on the difference between the detected output signals from a pair of divided light detecting areas positioned and shaped so as not to overlap the area where the zeroth-order light and the first-order light overlap each other, in the central area of the light detector in the track direction.

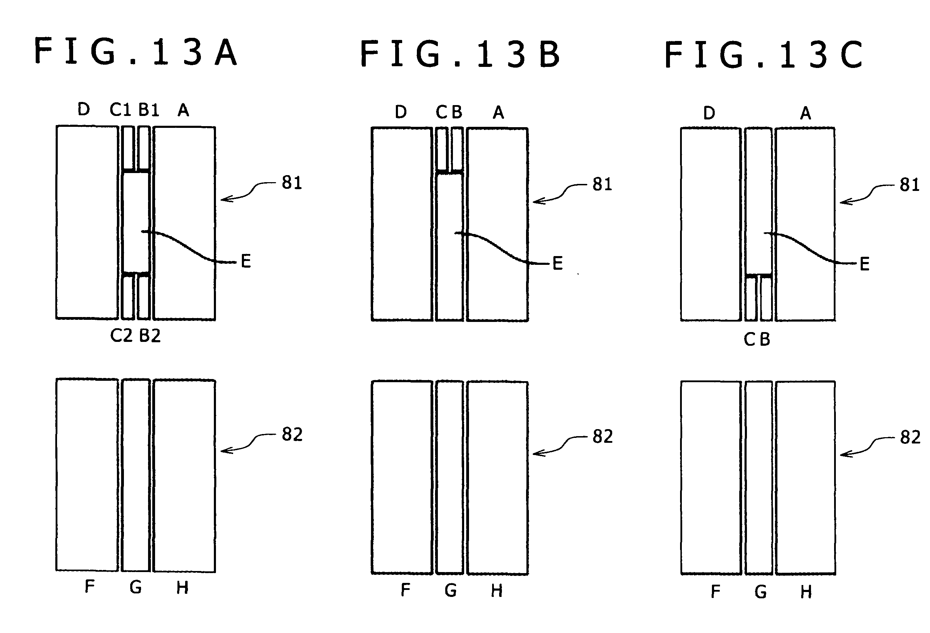

The other embodiment is applicable to the case wherein the pit trains are coarser as compared with the beam spot as shown in FIG. 9 or the beam spot is reduced in diameter as compared with the pitch of pit trains, and there is no area where zeroth-order light and first-order light do not overlap each other in the central area of the light detector in the track direction and in the direction perpendicular to the track. The other embodiment resides in that zeroth-order light and first-order light overlap each other or are held against each other in the central area of the light detector in the track direction and in the direction perpendicular to the track, and a light detector 81 has light detecting areas B1, B2, C1, C2 or B, C as shown in FIGS. 13A, 13B or 13C, which are positioned so as not to overlap the area where zeroth-order light and first-order light contained in the return light beam overlap each other, and are positioned in the area where only the zeroth-order light is applied.

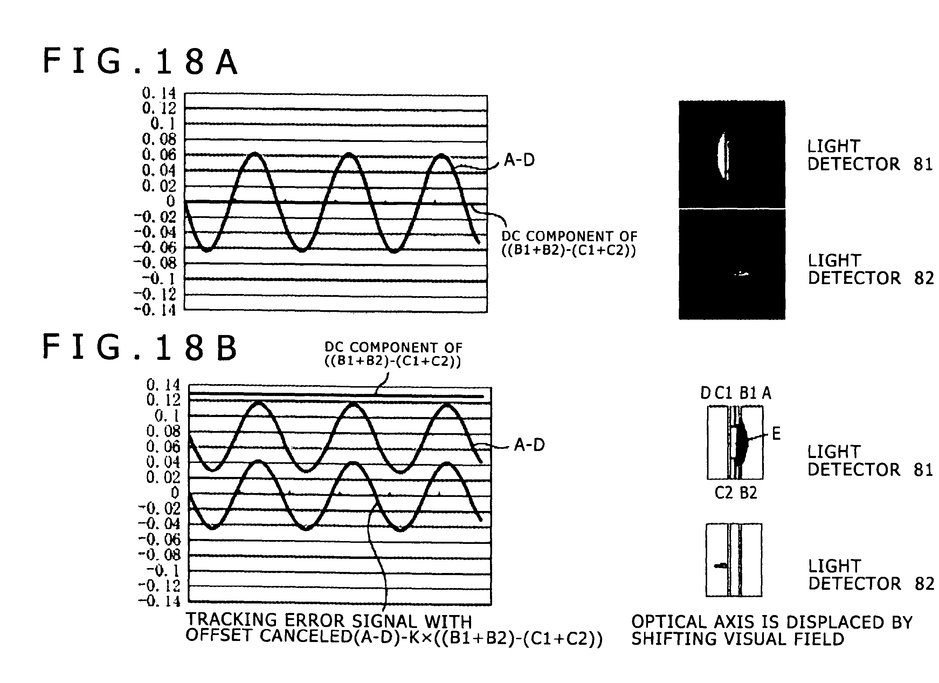

Specifically, the light detector 81 shown in FIG. 13A has light detecting areas B1, B2, C1, C2 shaped so as not to overlap the area where zeroth-order light and first-order light contained in the return light beam overlap each other. A signal corresponding to a DC offset component of a tracking error signal 35 is represented by (B1 + B2) - (C1 + C2) as shown in FIG. 18A where B1, B2, C1, C2 indicate the detected output signals from the light detecting areas B1, B2, C1, C2.

Since the light detecting areas B1, B2, C1, C2 of the light detector 81 are shaped so as not to overlap the area where the zeroth-order light and the first-order light shown in FIG. 9 overlap each other, the light detecting areas B1, B2, C1, C2 are not susceptible to the diffracted light (first-order light), and hence to pits and grooves that generate the tracking error signal 35. Therefore, even when the objective lens 23 is moved radially with respect to the optical disc 20 or the optical disc 20 is tilted to displace the optical axis of the return light beam, the light detecting areas B, C are not adversely affected as shown in FIG. 18B by canceling the DC component (offset) (B1 + B2) - (C1 + C2). Accordingly, a tracking error signal 35 free of a DC offset can be generated by calculating the difference (B1 + B2) - (C1 + C2) between the detected output signals from the light detecting areas B1, B2, C1, C2 and calculating (A - D) - K x ((B1 + B2) - (C1 + C2)) (see FIG. 18B).

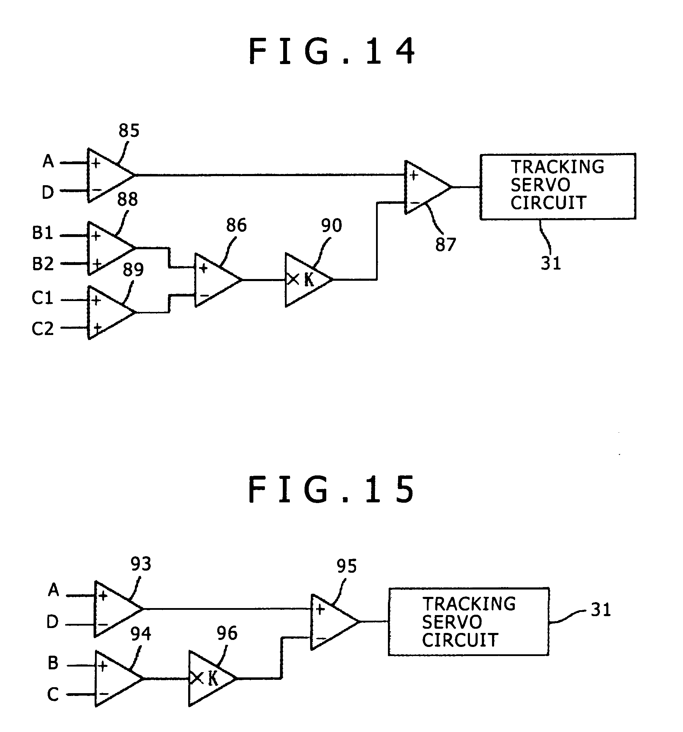

FIG. 14 shows a circuit for generating a tracking error signal 35 from the detected output signals from the light detector 81 shown in FIG. 13A. The circuit shown in FIG. 14 has three subtractors 85, 86, 87, two adders 88, 89, and a multiplier 90 for generating a tracking error signal 35 according to the above equation (A - D) - K x ((B1 + B2) - (C1 + C2)).

FIG. 15 shows a circuit for generating a tracking error signal 35 from a combination of the detected output signals from a light detector 81 shown in FIG. 13B or 13C. The circuit shown in FIG. 15 has three subtractors 93, 94, 95 and a multiplier 96 for generating a tracking error signal 35 according to the equation (A - D) - K x (B - C).

The focus error signal 36 shown in FIG. 1 can be generated from a combination of the detected output signals from a pair of light detectors 81, 82. FIGS. 11A through 11C show light beam spots detected on the light detectors 81, 82 when the objective lens 23 is moved along the optical axis and displaced to opposite sides of a just focused position. The light beam spots detected on the light detectors 81, 82 are focused in substantially symmetrical shapes with respect to the just focused position.

The difference between the detected output signals from the light detectors 81, 82 is plotted as shown in FIG. 12. At the just focused position, the difference between the detected output signals from the light detectors 81, 82 is substantially nil. Therefore, a positional deviation from the just focused position can be detected based on how much the difference between the detected output signals from the light detectors 81, 82 deviates from nil. This indicates that a focus error signal 36 can be generated from the difference between the detected output signals from the light detectors 81, 82 which are disposed along the light path.

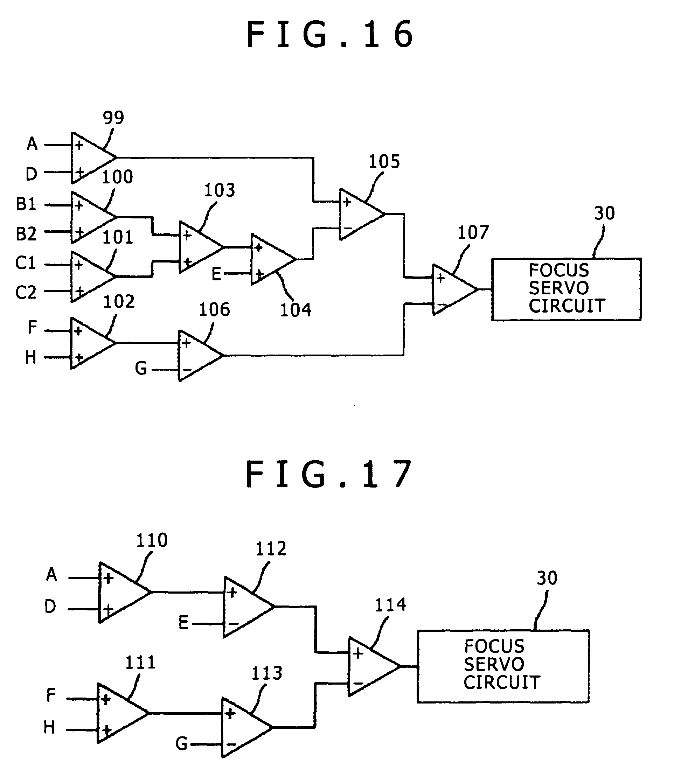

FIG. 16 shows a circuit for generating a focus error signal 36 from a combination of the detected output signals from the light detectors 81, 82 shown in FIG. 13A. The circuit shown in FIG. 16 has six adders 99, 100, 101, 102, 103, 104 and three subtractors 105, 106, 107 for generating a focus error signal 36 according to the equation (A + D) - (B1 + B2 + C1 + C2 + E) - ((F + H) - G).

FIG. 17 shows a circuit for generating a focus error signal 36 from a combination of the detected output signals from the light detectors 81, 82 shown in FIG. 13B or 13C. The circuit shown in FIG. 17 has two adders 110, 111 and four subtractors 112, 113, 114, 115 for generating a focus error signal 36 according to the equation (A + D) - E - ((F + H) - G).

By using the light detectors 81, 82 with the divided light detecting areas shaped as shown in FIGS. 13A, 13B, and 13C, it is possible to detect an offset-free tracking error signal 35, i.e., to calculate (A - D) - K x ((B1 + B2) - (C1 + C2)) or ((A - D) - K x (B - C) to detect a tracking error signal 35, even when the objective lens 23 is moved radially or the optical disc 20 is tilted to displace the optical axis of the return light beam. If the central light detecting areas B1, B2, C1, C2 or B, C of the light detector 81 are shaped so as not to overlap the area where the zeroth-order light and the first-order light overlap each other, then a tracking error signal 35 may be detected by calculating (A - D) + (F - H) - K x ((B1 + B2) + (C1 + C2)) or (F - H) - K x (B - C).

A focus error signal 36 can be detected by calculating the difference between the difference between the sum (A + D) of the detected output signals of the outer light detecting areas A, D of the light detector 81 and the sum (B1 + B2 +C1 + C2) or (B + C) of the detected output signals of the inner light detecting areas B1, B2, C1, C2 or B, C thereof, and the difference between the sum (F + H) of the detected output signals of the outer light detecting areas F, H of the light detector 82 and the detected output signal D of the inner light detecting area G thereof, i.e., (A + D) - (B + C) - ((F + H) - G).

In the illustrated embodiments, the present invention is applied to the optical disc apparatus employing the optical disc 20. However, the principles of the present invention are not limited to optical disc apparatus employing optical discs, but are also applicable to magneto-optical disc apparatus.

Although certain preferred embodiments of the present invention have been shown and described in detail, it should be understood that various changes and modifications may be made therein without departing from the scope of the appended claims.

## Claims

1. An optical disc apparatus for applying a light beam to a surface of an optical disc and detecting a return light beam from the surface of the optical disc, comprising:
a light detector for detecting the return light beam, said light detector having a first divided area and a second divided area which are divided from each other at the center of the return light beam in a direction perpendicular to a track on the surface of the optical disc, and a third divided area and a fourth divided area which are positioned respectively outwardly of said first divided area and said second divided area in the direction perpendicular to the track, said first divided area and said second divided area being positioned so as not to overlap an area where zeroth-order light and first-order light contained in the return light beam overlap each other.

2. An optical disc apparatus according to claim 1, comprising:
a first light detector and a second light detector for detecting the return light beam, said first light detector and said second light detector being disposed along a light path of said return light beam; and
each of said first light detector and said second light detector having a first divided area and a second divided area which are divided from each other at the center of the return light beam in a direction perpendicular to a track on the surface of the optical disc, and a third divided area and a fourth divided area which are positioned respectively outwardly of said first divided area and said second divided area in the direction perpendicular to the track, said first divided area and said second divided area being positioned so as not to overlap an area where zeroth-order light and first-order light contained in the return light beam overlap each other.

3. An optical disc apparatus according to claim 1, comprising:
a first light detector and a second light detector for detecting the return light beam, said first light detector and said second light detector being disposed along a light path of said return light beam;
said first light detector having a first divided area and a second divided area which are divided from each other at the center of the return light beam in a direction perpendicular to a track on the surface of the optical disc, and a third divided area and a fourth divided area which are positioned respectively outwardly of said first divided area and said second divided area in the direction perpendicular to the track, said first divided area and said second divided area being positioned so as not to overlap an area where zeroth-order light and first-order light contained in the return light beam overlap each other; and
said second light detector having a fifth divided area disposed at the center of the return light beam in the direction perpendicular to the track, and a sixth divided area and a seventh divided area which are positioned outwardly of said fifth divided area in the direction perpendicular to the track.

4. An optical disc apparatus for applying a light beam to a surface of an optical disc and detecting a return light beam from the surface of the optical disc, comprising:
a light detector for detecting the return light beam, said light detector having at least first and second pairs of divided areas which are symmetrical with respect to the center of the return light beam in a direction perpendicular to a track on the surface of the optical disc, said first pair of divided areas being positioned so as not to overlap an area where zeroth-order light and first-order light contained in the return light beam overlap each other, and being positioned in an area where only the zeroth-order light is applied, and said second pair of divided areas being disposed in an area where the first-order light is applied.

5. The optical disc apparatus according to claim 4, wherein said first pair of divided areas is positioned so as not to overlap the area where the zeroth-order light and the first-order light overlap each other, and is positioned in the area where only the zeroth-order light is applied, in an area displaced in a track direction along the track from the center of the return light beam in the track direction.

6. The optical disc apparatus according to claim 5, wherein the divided areas of said first pair are disposed respectively on opposite sides of the center of the return light beam in the track direction.

7. The optical disc apparatus according to claim 5, wherein the divided areas of said first pair are disposed respectively on one of opposite sides of the center of the return light beam in the track direction.

8. An optical disc apparatus according to claim 4, comprising:
a first light detector and a second light detector for detecting the return light beam, said first light detector and said second light detector being disposed along a light path of said return light beam;
said first light detector having at least first and second pairs of divided areas which are symmetrical with respect to the center of the return light beam in a direction perpendicular to a track on the surface of the optical disc, said first pair of divided areas being positioned so as not to overlap an area where zeroth-order light and first-order light contained in the return light beam overlap each other, and being positioned in an area where only the zeroth-order light is applied, and said second pair of divided areas being disposed in an area where the first-order light is applied; and
said second light detector having a pair of divided areas which are symmetrical with respect to the center of the return light beam in the direction perpendicular to the track, and a central undivided area aligned with said first pair of divided areas of said first light detector.

9. A method of controlling an optical disc apparatus according to claim 1, said method comprising the steps of:
canceling a direct current component of a tracking error with the difference between an output signal from said first divided area and an output signal from said second divided area; and
performing tracking control on said optical disc apparatus with a signal whose direct current component is canceled.

10. The method according to claim 9, wherein a tracking error signal is generated by calculating (A - D) - K(B - C) where B, C, A, D represent the output signals from said first divided area, said second divided area, said third divided area, and said fourth divided area, respectively, and K a proportionality constant or a function.

11. A method of controlling an optical disc apparatus according to claim 2, said method comprising the steps of:
canceling a direct current component of a tracking error with the difference between an output signal from said first divided area and an output signal from said second divided area of said first light detector or said second light detector;
performing tracking control on said optical disc apparatus with a signal whose direct current component is canceled;
detecting a focus error from a combination of output signals from said first light detector and said second light detector; and
performing focus control on the light beam applied to the surface of the optical disc based on said focus error.

12. A method of controlling an optical disc apparatus according to claim 3, said method comprising the steps of:
canceling a direct current component of a tracking error with the difference between an output signal from said first divided area and an output signal from said second divided area of said first light detector;
performing tracking control on said optical disc apparatus with a signal whose direct current component is canceled;
detecting a focus error from a combination of output signals from said first light detector and said second light detector; and
performing focus control on the light beam applied to the surface of the optical disc based on said focus error.

13. A method of controlling an optical disc apparatus according to claim 4, said method comprising the steps of:
obtaining a direct current component of a tracking error quantity from the difference between output signals from said first pair of divided areas; and
performing tracking control on said optical disc apparatus with an output signal which is produced by subtracting said direct current component from a tracking error quantity generated from the difference between output signals from said second pair of divided areas.

14. The method according to claim 13, wherein the direct current component is obtained based on B - C and a tracking error signal is generated based on (A - D) - K x (B - C) where B, C represent the output signals from said first pair of divided areas, A, D the output signals from said second pair of divided areas, and K a proportionality constant or a function.

15. A method of controlling an optical disc apparatus according to claim 8, said method comprising the steps of:
obtaining a direct current component of a tracking error quantity from the difference between output signals from said first pair of divided areas of said first light detector;
performing tracking control on said optical disc apparatus with an output signal which is produced by subtracting said direct current component from a tracking error quantity generated from the difference between output signals from said second pair of divided areas of said first light detector; and
performing focus control on the light beam applied to the surface of the optical disc based on a focus servo error quantity which is produced from the difference between the sum of the output signals from said second pair of divided areas of said first light detector and the sum of the output signals from said pair of divided areas of said second light detector.

16. The method according to claim 15, wherein the sum of the output signals from said first pair of divided areas of said first light detector is subtracted from the sum of the output signals from said second pair of divided areas of said first light detector, and an output signal from the central area of said second light detector is subtracted from the sum of the output signals from said pair of divided areas of said second light detector.

17. The method according to claim 15, wherein a focus error signal is generated by calculating ((A + D) - (B + C)) - ((F + H) - G)) where B, C represent the output signals from said first pair of divided areas of said first light detector, A, D the output signals from said second pair of divided areas of said first light detector, F, H the output signals from said pair of divided areas of said second light detector, and G the output signal from the central area of said second light detector.
